# EUROPÄISCHE PATENTANMELDUNG

(11) **EP 3 560 710 A1**
(43) Veröffentlichungstag der Anmeldung: **30.10.2019**
(21) Anmeldenummer: 18168752.6
(22) Anmeldetag: 23.04.2018
(51) Int. Cl.: B32B 37/14, B32B 38/18

(54) **VORRICHTUNG UND VERFAHREN ZUM AUSRICHTEN EINES FLÄCHIGEN MATERIALS GEGENÜBER EINER LAMINIERFOLIE**

(71) Anmelder: Chr. Renz GmbH, 73540 Heubach (DE)
(72) Erfinder: HERD, Nicolas, 72622 Nürtingen (DE)
(74) Vertreter: Schmid, Wolfgang

(57) **Zusammenfassung**

Eine Vorrichtung (1) zum Ausrichten eines flächigen Materials (2), insbesondere eines Papierblatts (2a), gegenüber einer Laminierfolie (3) weist folgende Merkmale auf: einen Schlitz (9) zum Einführen der Laminierfolie (3) mit dem darin eingelegten flächigen Material (2), eine Gegenkrafterzeugungseinrichtung (10) zum Erzeugen einer entgegen der Einführrichtung (x) wirkenden Kraft auf die Laminierfolie (3) mit dem darin eingelegten flächigen Material (2).

## Beschreibung

Die Erfindung betrifft eine Vorrichtung zum Ausrichten eines flächigen Materials, insbesondere eines Papierblatts, gegenüber einer Laminierfolie. Des Weiteren betrifft die Erfindung ein Verfahren zum Ausrichten eines flächigen Materials, insbesondere eines Papierblatts, gegenüber einer Laminierfolie.

Derartige Laminierfolien sowie die Vorgehensweise zum Laminieren von Papierblättern sind aus dem allgemeinen Stand der Technik bekannt. Hierzu wird das Papierblatt in eine Laminierfolie eingelegt, die meist aus zwei an einer Seitenkante miteinander verbundenen Einzelfolien besteht. Eine erhebliche Schwierigkeit, insbesondere für unerfahrene Nutzer, besteht dabei im Ausrichten des Papierblatts innerhalb bzw. gegenüber der Laminierfolie, was dazu führen kann, dass das Papierblatt nicht exakt mittig in der Laminierfolie angeordnet ist. Häufig werden daher bei solchen Laminiervorgängen nicht die gewünschten Ergebnisse erreicht. In jedem Fall ist das Ausrichten des Papierblatts gegenüber der Laminierfolie mit einem sehr hohen Aufwand verbunden, was häufig dazu führt, dass solche Laminiervorgänge wiederholt werden müssen.

Es ist daher Aufgabe der vorliegenden Erfindung, eine Vorrichtung zum Ausrichten eines flächigen Materials, insbesondere eines Papierblatts, gegenüber einer Laminierfolie zu schaffen, die auch für unerfahrene Nutzer einfach zu bedienen ist und zu zuverlässigen Ergebnissen führt.

Erfindungsgemäß wird diese Aufgabe durch die in Anspruch 1 genannten Merkmale gelöst.

Die erfindungsgemäße Vorrichtung weist einen Schlitz zum Einführen der Laminierfolie mit dem darin eingelegten flächigen Material und eine Gegenkrafterzeugungseinrichtung auf, die eine entgegen der Einführrichtung wirkende Kraft auf die Laminierfolie mit dem darin eingelegten flächigen Material erzeugt. Auf diese Weise wird beim Einlegen der Laminierfolie in den Schlitz und beim anschließenden Einlegen des flächigen Materials in die Laminierfolie und dem Aufbringen einer gewissen Kraft auf das flächige Material dasselbe zusammen mit der Laminierfolie in den Schlitz geschoben.

Die Gegenkrafterzeugungseinrichtung bewirkt dabei, dass sich die Laminierfolie erst dann durch den Schlitz hindurch bewegt, wenn das flächige Material an der Kante, an der es mit der Laminierfolie in Kontakt kommt, vollständig und damit parallel an der Laminierfolie anliegt. Dadurch wird beim Einführen der Laminierfolie mit dem darin eingelegten flächigen Material in den erfindungsgemäßen Schlitz eine exakte Ausrichtung des flächigen Materials innerhalb der Laminierfolie erreicht. Durch die Gegenkrafterzeugungseinrichtung wird also verhindert, dass die Laminierfolie mit dem darin eingelegten flächigen Material einfach durch den Schlitz rutscht, ohne dass eine Ausrichtung des flächigen Materials innerhalb der Laminierfolie stattfindet.

Die erfindungsgemäße Vorrichtung gewährleistet somit sehr gute und insbesondere gleichbleibende Ergebnisse bei der Ausrichtung von flächigen Materialien, insbesondere Papierblättern, innerhalb von Laminierfolien. In der Konsequenz führt dies zu sehr exakten Arbeitsergebnissen, wenn flächige Materialien, insbesondere Papierblätter, laminiert werden sollen.

In einer sehr vorteilhaften Weiterbildung der Erfindung kann vorgesehen sein, dass der Schlitz durch zwei voneinander beabstandete Führungselemente gebildet ist. Diese Führungselemente, welche die Laminierfolie mit dem darin eingelegten flächigen Material während des Ausrichtens führen, stellen eine einfache Möglichkeit zur Bildung des Schlitzes dar. Bei den Führungselementen kann es sich sowohl um voneinander unabhängige Bauteile als auch um ein einteiliges Bauteil handeln, in das der Schlitz eingebracht ist.

Eine sehr einfach zu realisierende Ausführungsform der Erfindung kann darin bestehen, dass die Gegenkrafterzeugungseinrichtung eines oder mehrere in den Schlitz ragende Reibungselemente aufweist, die aus einem elastischen Material bestehen oder elastisch gelagert sind. Solche aus einem elastischen Material bestehende Reibungselemente, beispielsweise Gummistreifen oder Gummilippen, sorgen auf sehr zuverlässige Art und Weise dafür, dass die zum exakten Ausrichten des flächigen Materials gegenüber der Laminierfolie erforderliche Gegenkraft erzeugt wird. Die Reibungselemente können auch als Nocken oder ähnliches ausgeführt sein, die elastisch, beispielsweise federnd, gelagert sind und auf diese Weise die Gegenkrafterzeugungseinrichtung bilden.

Wenn dabei das wenigstens eine Reibungselement mittels wenigstens eines Befestigungselements an einem der den Schlitz bildenden Führungselemente befestigt ist, so ergibt sich eine einfache Konstruktion, die einen sicheren Halt der Reibungselemente an einem der Führungselemente gewährleistet. Grundsätzlich wäre es jedoch auch möglich, das wenigstens eine Reibungselement ohne oder auch mit mehreren kleinen Befestigungselementen zu halten. Beispielsweise könnte das wenigstens eine Reibungselement mit wenigstens einem der Führungselemente verklebt oder einteilig mit demselben ausgeführt sein. Wesentlich ist nur die Erzeugung eines leichten Widerstands, der das flächige Material an der Kante der Laminierfolie ausrichtet.

In einer sehr vorteilhaften Weiterbildung der Erfindung kann vorgesehen sein, dass die Gegenkrafterzeugungseinrichtung wenigstens eine in den Schlitz ragende Bürste aufweist. Eine solche Bürste kann die oben genannten, aus einem elastischen Material bestehenden Reibungselemente in der Form einzelner Borsten aufweisen und ist ebenfalls in der Lage, die erforderliche Gegenkraft entgegen der Einführrichtung der Laminierfolie zu erzeugen.

Eine weitere vorteilhafte Ausgestaltung der Erfindung kann darin bestehen, dass die Gegenkrafterzeugungseinrichtung wenigstens zwei als die den Schlitz bildenden Führungselemente ausgebildete, drehbare Rollen und/oder Walzen aufweist. Solche Rollen bzw. Walzen können ebenfalls die gewünschte Gegenkraft erzeugen, indem sie eine Reibung auf die durch dieselben hindurchgeführte Laminierfolie erzeugen. Mit der Angabe "Rollen und/oder Walzen" sind dabei sämtliche Arten von drehbaren Elementen gemeint, mit denen die gewünschte Gegenkraft erzeugt werden kann. Gegebenenfalls können diese drehbaren Elemente auch angetrieben sein.

Eine sehr einfache Möglichkeit zur Bildung der Gegenkrafterzeugungseinrichtung kann außerdem darin bestehen, dass diese durch eine reibungserhöhende Schicht auf wenigstens einem der den Schlitz bildenden Führungselemente gebildet ist. Dabei ist zwar eine exakte Ausführung der den Schlitz zwischen sich bildenden Führungselemente erforderlich, es ergibt sich jedoch vorteilhafter Weise ein geringer Aufwand und insbesondere keine zusätzlichen Teile.

Dies ist auch der Fall, wenn die Gegenkrafterzeugungseinrichtung dadurch gebildet ist, dass die den Schlitz bildenden Führungselemente einen derartigen Abstand voneinander aufweisen, dass innerhalb des Schlitzes eine entgegen der Einführrichtung wirkende Kraft auf die Laminierfolie mit dem darin eingelegten flächigen Material erzeugt wird. Grundsätzlich ist es nämlich möglich, auf zusätzliche Bauteile zu verzichten und lediglich die Führungselemente sehr exakt miteinander auszurichten bzw. sehr exakt relativ zueinander anzuordnen, so dass ebenfalls der Effekt der Erzeugung einer Gegenkraft entgegen der Einführrichtung der Laminierfolie in dem Schlitz erzeugt wird. Möglicherweise ist eine solche Lösung jedoch nur für bestimmte Dicken der Laminierfolie und darin eingelegten flächigen Materialien geeignet.

Eine weitere sehr vorteilhafte Ausführungsform der Erfindung kann darin bestehen, dass an wenigstens einem seitlichen Rand des Schlitzes wenigstens ein Anschlag für die Laminierfolie angeordnet ist. Dadurch ist ein exaktes Ausrichten der Laminierfolie in Längsrichtung des Schlitzes gewährleistet.

Besonders vorteilhaft lässt sich dies nutzen, wenn an wenigstens einem seitlichen Rand des Schlitzes wenigstens ein Anschlag für das flächige Material angeordnet ist. Auf diese Weise ist auch ein Anschlag für das in die Laminierfolie eingelegte flächige Material gegeben.

Dabei ergibt sich eine sehr exakte Ausrichtung des flächigen Materials innerhalb der Laminierfolie, wenn der wenigstens eine Anschlag für das flächige Material einen Abstand von dem wenigstens einen Anschlag für die Laminierfolie aufweist, der einem zu bildenden seitlichen Überstand der Laminierfolie über das flächige Material entspricht. Dieser Überstand kann demnach durch das Maß, um das der Anschlag für das flächige Material über den Anschlag für die Laminierfolie übersteht, eingestellt werden. Gegebenenfalls könnte wenigstens einer der Anschläge auch verstellbar ausgeführt sein.

Des Weiteren kann vorgesehen sein, dass sich an wenigstens eines der den Schlitz bildenden Führungselemente eine Auflagefläche anschließt. Dies stellt eine Vereinfachung der Bedienung der erfindungsgemäßen Vorrichtung dar, da der Nutzer einen Teil der Laminierfolie auf der Auflagefläche ablegen kann.

Um die Fertigung der erfindungsgemäßen Vorrichtung zu vereinfachen, kann des Weiteren vorgesehen sein, dass die Auflagefläche einteilig mit dem Führungselement ausgebildet ist.

In Anspruch 14 ist ein Verfahren zum Ausrichten eines flächigen Materials, insbesondere eines Papierblatts, gegenüber einer Laminierfolie mittels einer erfindungsgemäßen Vorrichtung angegeben.

Dieses Verfahren ermöglicht ein sehr einfaches Ausrichten des flächigen Materials gegenüber der Laminierfolie, sodass die gewünschten Arbeitsergebnisse zuverlässig erreicht werden.

Eine für alle Nutzer besonders einfach verständliche Ausführungsform des Verfahrens ergibt sich, wenn die Laminierfolie mit dem darin eingelegten flächigen Material durch den Schlitz gezogen wird.

Nachfolgend ist ein Ausführungsbeispiel der Erfindung anhand der Zeichnung prinzipmäßig dargestellt.

Es zeigt:
- Fig. 1: eine perspektivische Ansicht einer erfindungsgemäßen Vorrichtung;
- Fig. 2: einen Schnitt nach der Linie II-II aus Fig. 1;
- Fig. 3: einen ersten Zustand bei der Durchführung eines erfindungsgemäßen Verfahrens;
- Fig. 4: einen zweiten Zustand bei der Durchführung des erfindungsgemäßen Verfahrens; und
- Fig. 5: einen dritten Zustand bei der Durchführung des erfindungsgemäßen Verfahrens.

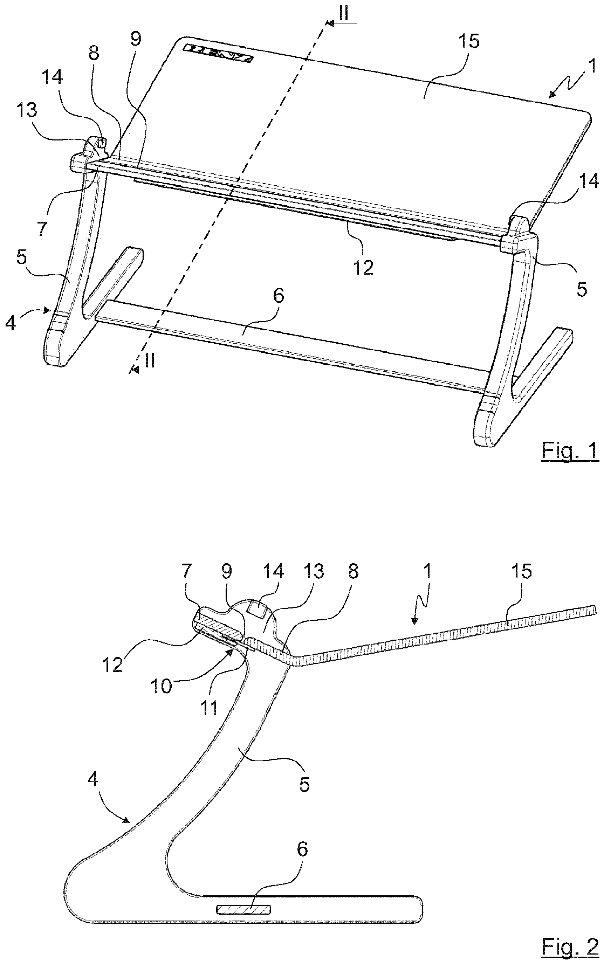

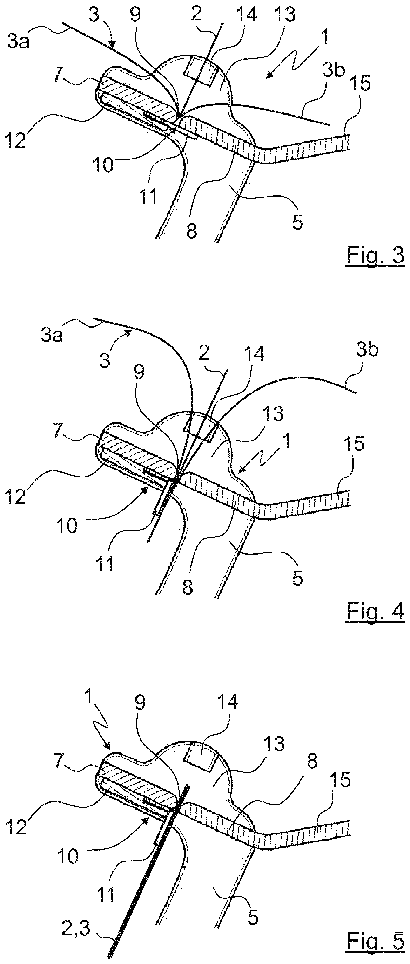

Fig. 1 zeigt eine Vorrichtung 1 zum Ausrichten eines flächigen Materials 2, im vorliegenden Fall eines Papierblatts 2a, gegenüber einer Laminierfolie 3. Die Vorrichtung 1 weist ein Gestell 4 mit zwei voneinander beabstandeten Füßen 5 und einem die beiden Füße 5 miteinander verbindenden Verbindungselement 6 auf. Im oberen Bereich der Füße 5 sind diese mittels zweier Führungselemente 7 und 8 miteinander verbunden. Die beiden Führungselemente 7 und 8, die auch als Stege bezeichnet werden können, bilden zwischen sich einen Schlitz 9, der in dem Schnitt von Fig. 2 besser zu erkennen ist. Der Schlitz 9 dient zum Einführen der Laminierfolie 3 mit dem darin eingelegten flächigen Material 2, wie dies in den Figuren 3, 4 und 5 besser zu erkennen ist. Hierzu weist der Schlitz 9 eine geeignete Breite auf, um Papierblätter 2a und daran angepasste Laminierfolien 3 mit gewünschten Formaten aufnehmen zu können.

Des Weiteren weist die Vorrichtung 1 eine Gegenkrafterzeugungseinrichtung 10 auf, die dazu dient, eine entgegen der in den Figuren 3 bis 5 mit "x" bezeichneten Einführrichtung der Laminierfolie 3 mit dem darin eingelegten flächigen Material 2 in den Schlitz 9 wirkende Kraft auf die Laminierfolie 3 mit dem darin eingelegten flächigen Material 2 zu erzeugen.

In dem in den Figuren dargestellten Ausführungsbeispiel weist die Gegenkrafterzeugungseinrichtung 10 eines oder mehrere entlang des Schlitzes 9 angeordnete und in den Schlitz 9 ragende Reibungselemente 11 auf, die aus einem elastischen Material, wie z.B. Gummi, bestehen. Die Reibungselemente 11 sind im vorliegenden Fall mittels eines Befestigungselements 12, das in der Art einer Leiste ausgebildet ist, an einem der den Schlitz 9 bildenden Führungselemente 7 bzw. 8, im vorliegenden Fall an dem vorderen Führungselement 7, befestigt.

Des Weiteren weist die Vorrichtung 1 einen an einem seitlichen Rand des Schlitzes 9 angeordneten ersten Anschlag 13 auf, der zum Anlegen der Laminierfolie 3 dient. Im vorliegenden Fall ist der erste Anschlag 13 für die Laminierfolie 3 durch den sich oberhalb der Führungselemente 7 und 8 befindenden Bereich des Fußes 5 gebildet. Die Vorrichtung 1 weist außerdem einen zweiten Anschlag 14 auf, der zum Anlegen des flächigen Materials 2 beim Ausrichten desselben gegenüber der Laminierfolie 3 dient. Der Anschlag 14 ist ebenfalls an dem Fuß 5 vorgesehen, und zwar oberhalb des ersten Anschlags 13, und erstreckt sich von dem Fuß 5 weg in Richtung des Schlitzes 9. Vorzugsweise weist der zweite Anschlag 14 für das flächige Material 2 einen Abstand von dem ersten Anschlag 13 für die Laminierfolie 3 auf, der einem zu bildenden seitlichen Überstand der Laminierfolie 3 über das flächige Material 2 entspricht. Dadurch wird der exakt gewünschte Abstand des seitlichen Rands des flächigen Materials 2 von dem seitlichen Rand der Laminierfolie 3 eingestellt. Es ist außerdem zu erkennen, dass auf beiden Seiten des Schlitzes 9 bzw. an beiden Enden desselben jeweilige Anschläge 13 und 14 vorgesehen sind. Zusätzlich oder alternativ zu den Anschlägen 13 und/oder 14 ist es auch möglich, an einer geeigneten Stelle der Vorrichtung 1 eine Markierung, die gegebenenfalls farbig sein kann, anzubringen, an der die Laminierfolie 3 bzw. das flächige Material 2 ausgerichtet werden könnte. Da die Laminierfolie 3 durchsichtig ist, wäre eine solche farbige Markierung gut zu erkennen. Auch fühlbare bzw. erhabene Markierungen, die über die Oberfläche, auf der sie angebracht sind, überstehen, sind denkbar.

An eines der den Schlitz 9 bildenden Führungselemente 7 oder 8, im vorliegenden Fall an das hintere Führungselement 8, schließt sich eine Auflagefläche 15 an, die zum Auflegen der Laminierfolie 3 während des Ausrichtens des flächigen Materials 2 gegenüber der Laminierfolie 3 dient. Die Auflagefläche 15 ist im dargestellten Ausführungsbeispiel einteilig mit dem Führungselement 8 ausgebildet.

Vorzugsweise sind sämtliche der Bauteile der Vorrichtung 1 mit Ausnahme der Reibungselemente 11 aus Kunststoff ausgebildet und können beispielsweise in einem Spritzgießverfahren hergestellt werden. Beispielsweise können das Verbindungselement 6 sowie die Führungselemente 7 und 8 mittels geeigneter Steckverbindungen mit den Füßen 5 verbunden werden. Zusätzlich können diese Teile auch miteinander verschraubt und/oder verklebt werden.

In den Figuren 3 bis 5 ist ein Verfahren zum Ausrichten des flächigen Materials 2 bzw. des Papierblatts 2a gegenüber der Laminierfolie 3 mittels der oben beschriebenen Vorrichtung 1 dargestellt. Dabei wird zunächst die Laminierfolie 3 an dem Schlitz 9 angelegt und das flächige Material 2 wird in die geöffnete Laminierfolie 3 eingelegt, wie in Fig. 3 dargestellt. Die Laminierfolie 3 ist dabei in an sich bekannter Weise aus zwei einzelnen Laminierfolien 3a und 3b gebildet, die an einer ihrer kurzen Seitenkanten miteinander verbunden, insbesondere verschweißt sind und die auseinander gespreizt werden, um das flächige Material 2 dazwischen einzuführen. Anschließend werden die Laminierfolie 3 und das in die Laminierfolie 3 eingelegte flächige Material 2 in den Schlitz 9 eingeführt und es wird eine Kraft auf das flächige Material 2 in Richtung der Laminierfolie 3, also in den Figuren 3 bis 5 mit "x" bezeichneten Einführungsrichtung, aufgebracht. Diese Kraft führt dazu, dass sich das flächige Material 2 an seiner unteren, die Laminierfolie 3 berührenden Kante an der Laminierfolie 3 ausrichtet, da die Gegenkrafterzeugungseinrichtung 10 so ausgelegt ist, dass sie bei Aufbringen einer solchen Kraft eine Gegenkraft auf die Laminierfolie 3 aufbringt und das Eindringen derselben in den Schlitz 9 verhindert bzw. erschwert. Erst bei Aufbringen einer stärkeren Kraft bzw. wenn das flächige Material 2 vollständig in die Laminierfolie 3 eingeführt ist, wird die Gegenkrafterzeugungseinrichtung 10 im vorliegenden Fall also die Reibungselemente 11, nach unten weg gedrückt, wie dies in Fig. 4 dargestellt ist. Dies führt dazu, dass sich die Laminierfolie 3 mit dem darin eingelegten flächigen Material 2 durch den Schlitz 9 bewegt. Anschließend kann die Laminierfolie 3 mit dem darin eingelegten flächigen Material 2 durch den Schlitz 9 gezogen werden. Dies ist jedoch nicht unbedingt erforderlich, da der Ausrichtvorgang bereits zuvor stattgefunden hat und es auch möglich ist, die Laminierfolie 3 mit dem darin eingelegten flächigen Material 2 entgegen der Richtung "x" aus dem Schlitz 9 herauszuziehen. Anschließend kann die Laminierfolie 3 mit dem darin eingelegten flächigen Material 2 in an sich bekannter Weise laminiert werden.

Während bei der in den Figuren dargestellten Ausführungsform die Gegenkrafterzeugungseinrichtung 10 mehrere entlang des Schlitzes 9 angeordnete und in den Schlitz 9 ragende Reibungselemente 11 aufweist, kann diese auch anders ausgebildet sein. Beispielsweise ist es möglich, dass die Gegenkrafterzeugungseinrichtung 10 wenigstens zwei drehbar gelagerte Rollen bzw. Walzen aufweist, zwischen denen der Schlitz 9 gebildet ist. Mit anderen Worten, die Rollen bzw. Walzen würden in diesem Fall die den Schlitz 9 bildenden Führungselemente 7 und 8 darstellen. Die Gegenkrafterzeugungseinrichtung 10 kann auch durch eine reibungserhöhende Schicht auf wenigstens einem der den Schlitz 9 bildenden Führungselemente 7 und/oder 8 gebildet sein. Des Weiteren besteht die Möglichkeit, die Gegenkrafterzeugungseinrichtung 10 dadurch zu bilden, dass die den Schlitz 9 bildenden Führungselemente 7 und 8 einen derartigen Abstand voneinander aufweisen, dass innerhalb des Schlitzes 9 eine entgegen der Einführrichtung x wirkende Kraft auf die Laminierfolie 3 mit dem darin eingelegten flächigen Material 2 erzeugt wird. Dieser Abstand kann ungefähr der Dicke der Laminierfolie 3 und einem darin eingelegten flächigen Material 2 zuzüglich einer gewissen Zugabe betragen. Außerdem wäre es möglich, die Gegenkrafterzeugungseinrichtung 10 in der Form einer Umlenkeinrichtung bzw. Kaskade auszubilden. Eine weitere Möglichkeit zur Realisierung der Gegenkrafterzeugungseinrichtung 10 besteht darin, um weniger als 360° drehbare, zurückfedernde Nocken zu verwenden. Sämtliche der genannten Ausführungsformen der Gegenkrafterzeugungseinrichtung 10 können auch miteinander kombiniert werden.

Die Gegenkrafterzeugungseinrichtung 10 kann auch durch andere, hierin nicht beschriebene Ausführungsformen realisiert werden. Entscheidend ist dabei lediglich, dass die Gegenkrafterzeugungseinrichtung 10 eine entgegen der Einführrichtung x des mit der Laminierfolie 3 ausgerichteten flächigen Materials 2 wirkende Kraft auf die Laminierfolie 3 mit dem darin eingelegten flächigen Material 2 erzeugt, da auf diese Weise erreicht wird, dass sich die Laminierfolie 3 erst dann durch den Schlitz 9 hindurch bewegt, wenn das flächige Material 2 vollständig und parallel an der Laminierfolie 3 anliegt und somit das flächige Material 2 exakt innerhalb der Laminierfolie 2 ausgerichtet ist.

## Patentansprüche

1. Vorrichtung (1) zum Ausrichten eines flächigen Materials (2), insbesondere eines Papierblatts (2a), gegenüber einer Laminierfolie (3), mit folgenden Merkmalen:
- einen Schlitz (9) zum Einführen der Laminierfolie (3) mit dem darin eingelegten flächigen Material (2),
- eine Gegenkrafterzeugungseinrichtung (10) zum Erzeugen einer entgegen der Einführrichtung (x) wirkenden Kraft auf die Laminierfolie (3) mit dem darin eingelegten flächigen Material (2).

2. Vorrichtung nach Anspruch 1,
**dadurch gekennzeichnet, dass**
der Schlitz (9) durch zwei voneinander beabstandete Führungselemente (7,8) gebildet ist.

3. Vorrichtung nach Anspruch 1 oder 2,
**dadurch gekennzeichnet, dass**
die Gegenkrafterzeugungseinrichtung (10) eines oder mehrere in den Schlitz (9) ragende Reibungselemente (11) aufweist, die aus einem elastischen Material bestehen oder elastisch gelagert sind.

4. Vorrichtung nach den Ansprüchen 2 und 3,
**dadurch gekennzeichnet, dass**
das wenigstens eine Reibungselement (11) mittels wenigstens eines Befestigungselements (12) an einem der den Schlitz (9) bildenden Führungselemente (7,8) befestigt ist.

5. Vorrichtung nach einem der Ansprüche 1 bis 4,
**dadurch gekennzeichnet, dass**
die Gegenkrafterzeugungseinrichtung (10) wenigstens eine in den Schlitz (9) ragende Bürste aufweist.

6. Vorrichtung nach Anspruch 2,
**dadurch gekennzeichnet, dass**
die Gegenkrafterzeugungseinrichtung (10) wenigstens zwei als die den Schlitz (9) bildenden Führungselemente (7,8) ausgebildete, drehbare Rollen und/oder Walzen aufweist.

7. Vorrichtung nach Anspruch 2,
**dadurch gekennzeichnet, dass**
die Gegenkrafterzeugungseinrichtung (10) durch eine reibungserhöhende Schicht auf wenigstens einem der den Schlitz (9) bildenden Führungselemente (7,8) gebildet ist.

8. Vorrichtung nach Anspruch 2,
**dadurch gekennzeichnet, dass**
die Gegenkrafterzeugungseinrichtung (10) dadurch gebildet ist, dass die den Schlitz (9) bildenden Führungselemente (7,8) einen derartigen Abstand voneinander aufweisen, dass innerhalb des Schlitzes (9) eine entgegen der Einführrichtung (x) wirkende Kraft auf die Laminierfolie (3) mit dem darin eingelegten flächigen Material (2) erzeugt wird.

9. Vorrichtung nach einem der Ansprüche 1 bis 8,
**dadurch gekennzeichnet, dass**
an wenigstens einem seitlichen Rand des Schlitzes (9) wenigstens ein Anschlag (13,14) für die Laminierfolie (3) angeordnet ist.

10. Vorrichtung nach einem der Ansprüche 1 bis 9,
**dadurch gekennzeichnet, dass**
an wenigstens einem seitlichen Rand des Schlitzes (9) wenigstens ein Anschlag (13,14) für das flächige Material (2) angeordnet ist.

11. Vorrichtung nach den Ansprüchen 9 und 10,
**dadurch gekennzeichnet, dass**
der wenigstens eine Anschlag (13,14) für das flächige Material (2) einen Abstand von dem wenigstens einen Anschlag (13,14) für die Laminierfolie (3) aufweist, der einem zu bildenden seitlichen Überstand der Laminierfolie (3) über das flächige Material (2) entspricht.

12. Vorrichtung nach einem der Ansprüche 2 bis 10,
**dadurch gekennzeichnet, dass**
sich an wenigstens eines der den Schlitz (9) bildenden Führungselemente (7,8) eine Auflagefläche (15) anschließt.

13. Vorrichtung nach Anspruch 12,
**dadurch gekennzeichnet, dass**
die Auflagefläche (15) einteilig mit dem Führungselement (7,8) ausgebildet ist.

14. Verfahren zum Ausrichten eines flächigen Materials (2), insbesondere eines Papierblatts (2a), gegenüber einer Laminierfolie (3), mittels einer Vorrichtung (1) nach einem der Ansprüche 1 bis 13, wobei die Laminierfolie (3) und das in die Laminierfolie (3) eingelegte flächige Material (2) in den Schlitz (9) eingeführt werden, und wobei auf das flächige Material (2) eine Kraft in Richtung der Laminierfolie (3) aufgebracht wird.

15. Verfahren nach Anspruch 14,
**dadurch gekennzeichnet, dass**
die Laminierfolie (3) mit dem darin eingelegten flächigen Material (2) durch den Schlitz (9) gezogen wird.
